# EUROPEAN PATENT APPLICATION

(11) **EP 4 737 098 A1**
(43) Date of publication of application: **06.05.2026**
(21) Application number: 24210604.5
(22) Date of filing: 04.11.2024
(51) Int. Cl.: B29C 64/112, B29C 64/386, B33Y 10/00, B33Y 50/00

(54) **METHOD FOR PRINTING A THREE-DIMENSIONAL OBJECT AND A PRINTER THEREFOR**

(71) Applicant: Canon Production Printing Holding B.V., 5914 HH Venlo (NL)
(72) Inventor: MESTROM, Paulus M.A., Venlo (NL); CALLEWAERT-DORE', Tom W.J., Venlo (NL); FILIPPOVYCH, Kateryna, Venlo (NL)
(74) Representative: Canon Production Printing IP Department

(57) **Abstract**

A method for generating print files for a 3D object to be printed in layers on top of each other by means of a 3D printer, the method comprising the steps of a) determining the print files from data input including an intended geometry and colour information, b) simulating a print process using a thin-film equation to predict a geometry of the 3D object to be printed, c) updating the print files based on a deviation between a geometry predicted by the simulation and the intended geometry included in the data input, and d) repeating steps b) and c) until a required accuracy of the predicted geometry is achieved.

## Description

### FIELD OF THE INVENTION

The invention relates to a method for generating print files for a 3D object to be printed in layers on top of each other, the method comprising the step of a) determining the print files from data input including an intended geometry and colour information.

A printer for printing the 3D object may hereinafter also be referred to as a printing system. An inkjet printing assembly of the printer may comprise one or more print heads.

The term "perpendicular" may hereinafter also be referred to as the term "orthogonal". The term "nozzle" may be also referred to as "print element".

The term "3D" is meant to be equivalent to the term "three-dimensional". A three-dimensional object may also be a 2.5D object. A 2.5D object is a 3D object wherein a height of the 3D object in the third dimension usually referred to as the z dimension or z direction is relatively small compared to the sizes of the 3D object in the other two dimensions, e.g. x and y dimensions of the 3D object or x and y directions of a surface to be printed upon.

Hereinafter the term "voxel" is meant to be a three-dimensional counterpart to a pixel. It represents a value on a regular grid in a three-dimensional space.

In this application a resin is a viscous substance (of e.g. synthetic origin) that is convertible into polymers. The resin is fluid during printing and solidifies under influence of radiation.

### BACKGROUND OF THE INVENTION

When using inkjet, the geometrical accuracy of 2.5D or 3D prints is influenced by the flow of ink. The jetted drops flow out before being cured, resulting in deviations between the actual output, i.e. the print itself, and the intended output. These deviations become more critical when the edges of the to be printed object are steep, when the time before curing becomes longer or when the thickness of the printed layers is increased.

Until now this problem was solved by printing wrapping material around the object to restrict ink flow. However, a disadvantage of using wrapping material is that an additional postprocessing step is required for removing said wrapping material. The disadvantage is more critical for 2.5D printing in which case postprocessing steps are generally not needed due to the absence of support material and also very undesirable considering the large size of these prints. For 3D printing more postprocessing steps, such as removing support material or polishing, are required anyway, so the additional removal of the wrapping material can be combined with the removal of the support material.

Another disadvantage of wrapping the to be printed object is that the printed object has to be polished because the wrapping material and the ink mix at the interfaces between the printed object and the wrapping material. Commercially available 3D inkjet printers currently use wrapping material to completely wrap the printed object and therefore have said time-consuming post-processing steps as an intrinsic process step in print production.

Alternatively a scanner can be used to scan the height of the printed object during the print job. In this way, one can correct for geometric deviations due to ink flow. A disadvantage of the approach with a scanner is that developing and applying such a scanner and the corresponding data path is very expensive. In addition, the inks may have to be adjusted to be scannable.

Alternatively ink flow can be reduced by faster curing. However, it will be technically hard to cure the ink so fast that ink flow becomes negligible. Typical time scales for pin curing are hundreds of milliseconds.

Alternatively ink flow can be minimized by not printing a full layer per pass. If not all droplets are able to flow together before curing, the effects of ink flow can be reduced. However, such a printing strategy slows down the print process.

An objective of the invention is to provide a method and a printer for printing 3D objects with viscous materials without using any wrapping material or using substantially less wrapping material.

### SUMMARY OF THE INVENTION

According to the present invention this object is achieved by the method according to the invention, wherein the method comprising the steps of
b) simulating a print process using a thin-film equation to predict a geometry of the 3D object to be printed,
c) updating the print files based on a deviation between a geometry predicted by the simulation and the intended geometry included in the data input, and
d) repeating steps b) and c) until a required accuracy of the predicted geometry is achieved.

The present invention ensures that the geometry of the printed object is consistent with the intended output. The thin-film equation is used to predict the output based on the input, i.e. the bitmaps. Based on the deviation between the input and the predicted output, the input is adjusted. Then the new output is again predicted. This process is repeated until the required accuracy is achieved. Finally, the real print job is started. By using the input-correction-process based on the thin-film equation the objective is achieved.

According to an embodiment the method comprises the step of printing the 3D object according to the updated print files for which the required accuracy of the predicted geometry is achieved.

According to an embodiment the print process simulated in step b) comprises a sub-step of simulating an ink flow in the print process of the 3D object, wherein a height of a layer to be printed is small in relation to a width of the layer.

According to an embodiment the step c) comprises the sub-steps of comparing the predicted geometry to the intended geometry by calculating an average height at a pixel position on an XY plane and comparing the calculated average height at the pixel position to an intended height at the pixel position derived from the intended geometry, and adjusting an amount of ink to be deposited at the pixel position based on a difference between the average height and the intended height.

According to an embodiment the method comprises the step of comparing the required accuracy with the difference between the average height and the intended height.

According to an embodiment the thin-film equation is extended to represent the effect of a shrinkage of a volume of the jetted ink (layer) due to, during and after a curing process after jetting said layer. In principle curing takes place after each layer, but not necessarily. Performing accurate ink flow simulations is optimal if curing takes place after every swath or after every layer. Other situations may also be envisioned wherein the curing takes place after printing more than one layer, for example two layers.

According to an embodiment the method comprises the step of simplifying the thin-film equation by numerical discretization. The thin-film equation states how a height of a layer changes in time. It is a nonlinear partial differential equation depending both on time and the spatial coordinates. To solve the equation numerically, the time and the spatial coordinates are discretized. The discretization is a numerical approximation. The validity of the approximation depends on the discretization scheme and the step sizes. In particular, using backward differentiation larger time steps can be chosen, but the equations are still nonlinear. Choosing another discretization scheme can simplify the numerics.

According to an embodiment the method comprises the step of simplifying the thin-film equation by attributing same physical properties to different ink in case of printing with multiple inks.

According to an embodiment the 3D object to be printed does not exhibit large colour gradients.

According to an embodiment the 3D object is a dental element like an implant, a prosthesis, a crown or a bridge.

The present invention further relates to a printing system comprising a printhead assembly for jetting ink in order to form a 3D object and a print controller which is configured to perform the steps of a method according to the present invention.

The present invention also relates to a non-transitory software medium comprising executable program code configured to, when executed on a printing system, enable the printing system to perform the steps of the method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
Fig. 1 is a printing system in which a method according to the invention is applied;
Fig. 2 shows the application of the thin-film equation to the generation of the print files for the 3D object to be printed;
Fig. 3 is a flow diagram of the method according to the present invention; and
Fig. 4 schematically shows a non-transitory software medium according to the invention.

### DETAILED DESCRIPTION OF EMBODIMENTS

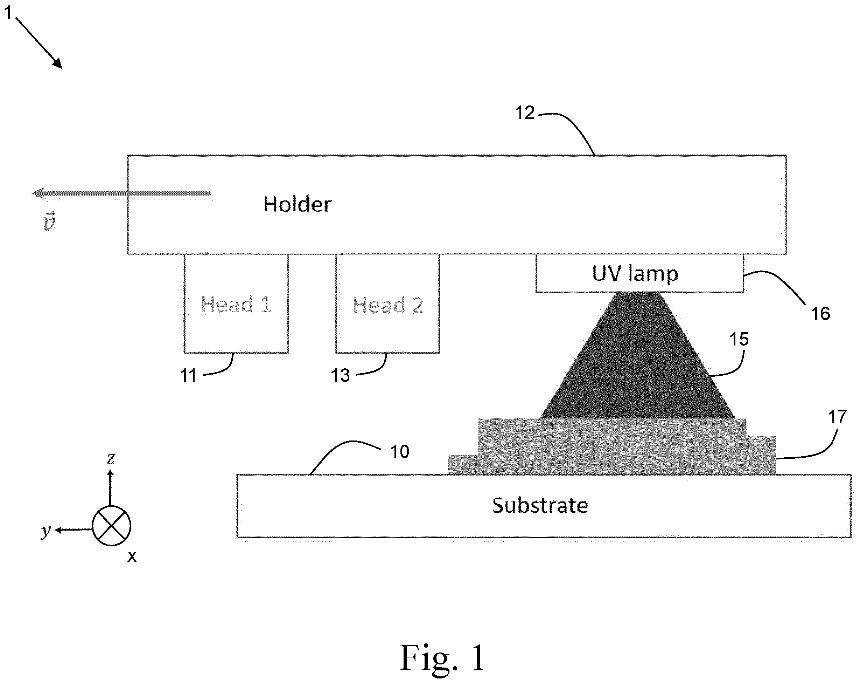

Fig. 1 shows a printing system 1 in which a method according to the invention is applied. The inkjet printer 1 comprises a holder 12 for holding the print heads 11, 13 for respectively ejecting a first resin 14 and a second resin 15, for example having different colours, and a radiation lamp 16 for providing radiation curing light, preferably a UV lamp. Each of the print heads 11, 13 is provided with at least one array of nozzles which have apertures in order to respectively eject the first resin 14 and the second resin 15. The at least one array of nozzles extends in a direction x orthogonal to the directions z and y. The holder 12 and the radiation lamp 16 are mounted on a carriage (not shown) which bi-directionally traverses over a print surface 10 in a y direction in an xy plane. On the print surface a substrate 10 is provided on which the layers of resins 14,15 are intended to be jetted.

The 3D inkjet printer with a curing strategy prints the 3D object. After each jetted layer of resin curing takes place by the curing lamp 16. Three printed resin layers 17 or groups 17 of printed resin layers are shown. A velocity vector v^{→} indicates a relative velocity between the printhead holder 12 and the substrate 10. Each of the three printed resin layers 17 or groups 17 of resin layers is cured after being jetted.

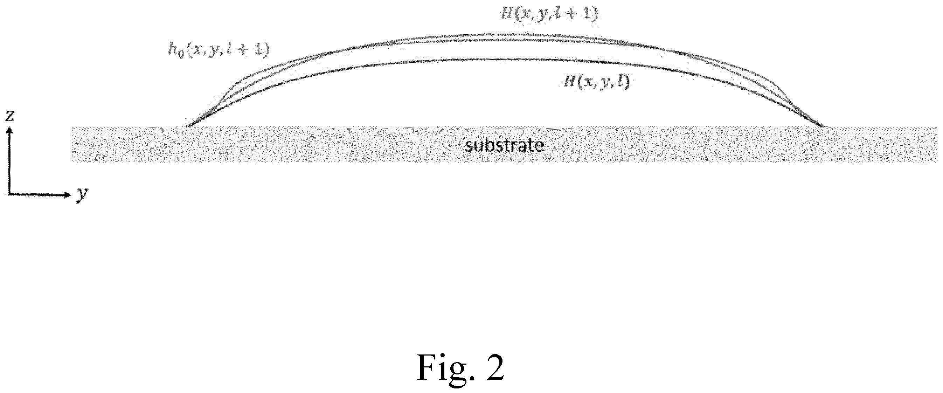

Fig. 2 shows the application of the thin-film equation to the generation of the print files for the 3D object to be printed. Step b) of the method according to the present invention is illustrated by an example of a simulation that is suitable for predicting the geometry of a printed object. The thin-film equation is particularly useful to simulate the ink flow in a 2.5D or 3D print process because the height of each layer is generally much smaller than the widths. Suppose that the height of the printed object after I layers is defined by the function H(x,y,l) and that we jet a liquid layer with height h₀(x,y,l+1) on top. The thin film equation ∂h/∂t=1/3µ ∇.(h^3 Vp) with V =(∂/∂x,∂/∂y) can then be used to predict how the height h(x,y,t,l+1) of the ink layer at time t evolves from h(x,y,t=0,l+1)=h₀(x,y,l+1). The pressure gradient is given by ∇p=ρg∇(h+H)-y∇(∇^2 (h+H)), where the second term follows from the Young-Laplace equation for weakly curved liquid surfaces. Here, γ is the surface tension of the liquid surface, ρ is the density of the liquid, and g is the gravitational acceleration.

The thin-film equation can thus be solved to find h(x,y,t_{c},l+1) where t_{c} is the time at which the (l+1)th ink layer is cured after jetting. The height of the printed object after I+1 layers is thus H(x,y,l+1)=H(x,y,t)+h(x,y,t_{c},l+1). The simulation can then be repeated for the next layers until the full print process is simulated.

In step c) of the method according to the present invention the predicted geometry is compared to the intended geometry. The comparison can for example be done by calculating the average height at a pixel position in the (x,y)-plane and comparing it to the intended height. The difference between the two heights determines whether more or less ink should be deposited at those pixels. In this way, the print files can be updated accordingly.

The volume of the ink might shrink in the curing process. The thin-film model presented above can be extended with this effect.

In order to faster solve the thin-film equation, the equation can be simplified using additional approximations. In case of printing with multiple inks, one can also attribute the same physical properties, i.e. the density and surface tension to the different inks.

The present invention excels for printed objects that do not exhibit large colour gradients. The present invention may thus be particularly interesting for printing dental elements like crowns, prosthesis, implants and bridges.

By applying the present invention no or less warping material is needed which reduces the amount of waste. Furthermore the printed object does not need to be polished as much, since no or less warping material is used. Also faster print strategies, e.g. printing thick layers, can still result in geometrically accurate prints by correcting for the ink flow using the method according to the present invention.

Fig. 2 illustrates how the simulations are set up. The height of the printed object after I layers is indicated by H(x,y,l). A liquid layer of ink is deposited on top. The function h0(x,y,l+1) describes the height profile of the layer. The thin-film equation is used to simulate the flow of this ink layer until it is cured. This results in H(x,y,l+1).

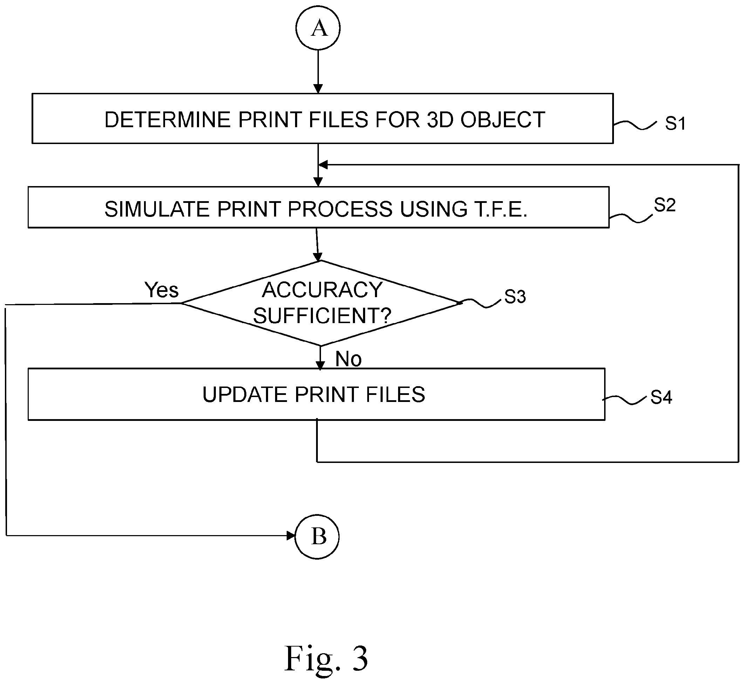

Fig. 3 shows an embodiment of the method of the present invention for printing a 3D object in a number of layers by means of a printing system according to the present invention. The total number of layers may be predetermined based on a desired or specified height of the 3D object. The method starts in a starting point A which leads to a first step S1.

In the first step S1 the print files are determined from data input including an intended geometry and colour information.

In a second step S2 a print process is simulated using a thin-film equation (T.F.E.) to predict a geometry of the 3D object to be printed.

In a third step S3 it is checked if a required accuracy of the predicted geometry is achieved. If so, the method proceeds to the end point B. If not so, the method proceeds to a fourth step S4.

In a fourth step S4 the print files are updated based on a deviation between a geometry predicted by the simulation and the intended geometry included in the data input. The method returns to the second step S2.

According to an alternative embodiment of the method the fourth step S4 is performed before the third step S3.

According to a further embodiment the method comprises a fifth step S5 (not shown) of printing the 3D object according to the updated print files for which the required accuracy of the predicted geometry is achieved.

The method according to the present invention may be applied to print dental elements like crowns, bridges, prosthetics and permanent dental implants with UV curable resins.

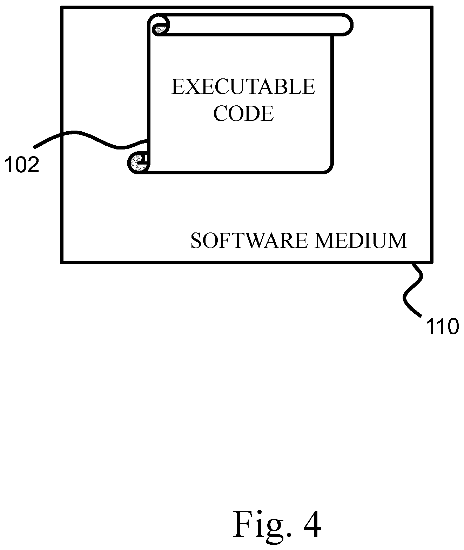

Fig. 4 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 3 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A method for generating print files for a 3D object to be printed in layers on top of each other, the method comprising the steps of
a) determining the print files from data input including an intended geometry and colour information,
b) simulating a print process using a thin-film equation to predict a geometry of the 3D object to be printed,
c) updating the print files based on a deviation between a geometry predicted by the simulation and the intended geometry included in the data input, and
d) repeating steps b) and c) until a required accuracy of the predicted geometry is achieved.

2. A method according to claim 1, wherein the method comprises the step of printing the 3D object according to the updated print files for which the required accuracy of the predicted geometry is achieved.

3. A method according to claim 1 or 2, wherein the print process simulated in step b) comprises a sub-step of simulating an ink flow in the print process of the 3D object, wherein a height of a layer to be printed is small in relation to a width of the layer.

4. A method according to any of the preceding claims, wherein the step c) comprises the sub-steps of comparing the predicted geometry to the intended geometry by calculating an average height at a pixel position on an XY plane and comparing the calculated average height at the pixel position to an intended height at the pixel position derived from the intended geometry, and adjusting an amount of ink to be deposited at the pixel position based on a difference between the average height and the intended height.

5. A method according to claim 4, wherein the method comprises the step of comparing the required accuracy with the difference between the average height and the intended height.

6. A method according to any of the preceding claims, wherein the method comprises the step of extending the thin-film equation to represent the effect of a shrinkage of a volume of the jetted ink (layer) due to, during and after a curing process after jetting said layer.

7. A method according to any of the preceding claims, wherein the method comprises the step of simplifying the thin-film equation by numerical discretization.

8. A method according to any of the preceding claims, wherein the method comprises the step of simplifying the thin-film equation by attributing same physical properties to different ink in case of printing with multiple inks.

9. A method according to any of the preceding claims, wherein the 3D object to be printed does not exhibit large colour gradients.

10. A method according to claim 9, wherein the 3D object is a dental element like an implant, prosthesis, a crown or a bridge.

11. A printing system comprising a printhead assembly for jetting ink in order to form a 3D object and a print controller which is configured to perform the steps of a method according to any of the preceding claims.

12. A non-transitory software medium comprising executable program code configured to, when executed on a printing system, enable the printing system to perform the steps of the method according to any of the claims 1 - 10.
